# EUROPEAN PATENT SPECIFICATION

(11) **EP 2 349 758 B1**
(45) Date of publication and mention of the grant of the patent: **17.12.2014**
(21) Application number: 08867629.1
(22) Date of filing: 18.12.2008
(51) Int. Cl.: B60J 1/18, B60J 7/12

(54) **CONVERTIBLE TOP HAVING OVERCENTER BACKLIGHT**
CABRIODACH MIT KNIEHEBELMECHANISMUS AM RÜCKFENSTER
TOIT DÉCAPOTABLE AYANT UNE LUNETTE DÉCENTRÉE

(30) Priority: 21.12.2007 US 962982
(43) Date of publication of application: 03.08.2011
(73) Proprietor: Valmet Automotive Oy, 23500 Uusikaupunki (FI)
(72) Inventor: NEUBRAND, Frank, West Bloomfield, MI 48322 (US)
(74) Representative: Kronthaler, Schmidt & Coll.
(86) International application number: PCT/US2008/087425
(87) International publication number: WO 2009/085951

(56) References cited:
- EP-A- 1 184 218
- EP-A1- 0 749 859
- US-A1- 2003 146 642
- US-A1- 2005 189 781

## Description

### CROSS-REFERENCE TO RELATED APPLICATIONS

This application claims priority of United States Patent Application No. 11/962,982 filed December 21, 2007.

### FIELD OF THE INVENTION

The invention relates to convertible top linkage mechanisms. More particularly, the invention relates to a convertible top having an overcenter linkage.

### BACKGROUND OF THE INVENTION

Convertible vehicles have tops that are movable between an extended position covering a passenger compartment and a retracted position disposed within a storage space, typically in a rear portion of the vehicle. A convertible top typically includes a linkage mechanism that provides support to the top and also allows the movement of the top between the extended and retracted positions. Optionally, drive mechanisms or actuators are used for automating the movement of the top between the extended and retracted positions.

Convertible tops have roof covers that are soft, rigid or a combination thereof. In soft top designs, a rear bow is typically used to support a rear edge of the roof cover and to move the rear edge of the roof cover between the extended and retracted positions. In conventional convertible top designs, it is not difficult for one to forcibly lift the rear bow from the extended position to gain access to the passenger compartment. Thus, it remains desirable to design a convertible top with a mechanism for retaining the linkage and, in particular, the rear bow in the closed position by making it difficult to lift the rear bow from the closed position.

### SUMMARY OF THE INVENTION

According to an embodiment of the invention, a convertible top for a motor vehicle includes a cover, a backlight assembly having a rear window and supporting a rear portion of the cover, a linkage, a rear bow that supports a rear edge of the cover and a rear linkage pivotally coupled to the rear bow. The linkage supports a portion of the cover forward of the backlight and can provide movement of the top between an extended position extending over a passenger compartment and a retracted position disposed in a storage space adjacent the passenger compartment. In addition, the rear bow articulates the rear edge of the cover during movement of the top between the extended and retracted positions and is movable between a closed position disposed on a top side of a body panel of the motor vehicle adjacent to the body panel and a generally upwardly raised open position.

An overcenter linkage can be provided that has a drive link and a first connector link, the drive link having one end pivotally coupled to the linkage about a linkage pivot and the first connector link having one end pivotally connected to the rear bow linkage about a rear bow linkage pivot. The drive link is also pivotally coupled to the first connector link about an overcenter pivot. The linkage pivot and the rear bow linkage pivot can define an overcenter line, the overcenter pivot being in an overcenter position above the overcenter line when the top is in the extended position in order to maintain the rear bow in the closed position. An actuator can be operatively coupled to the articulating linkage for actuating the overcenter pivot in and out of the overcenter position.

The backlight assembly may or may not serve as a link in the overcenter linkage that provides movement of the rear bow during movement of the top between the extended and retracted positions. In addition, the backlight assembly can be independently controlled from the cover by the linkage, rear bow and/or rear linkage pivotally coupled to the rear bow.

### BRIEF DESCRIPTION OF THE DRAWINGS

Advantages of the present invention will be readily appreciated as the same becomes better understood by reference to the following detailed description when considered in connection with the accompanying drawings, wherein:
Figure 1 is a side elevational view of a motor vehicle having a convertible top according to an embodiment of the invention, with a rear bow of the top shown in a closed position;
Figures 2-4 are side elevational views showing intermediate positions of the rear bow of the top illustrated in Figure 1 between the closed position and an open position;
Figure 5 is a side elevational view showing the. rear bow of the top illustrated in Figure 1 in an upwardly raised open position;
Figure 6 is a side elevational view of a motor vehicle having a convertible top according to another embodiment of the invention, with a rear bow of the top shown in a closed position; and
Figure 7 is a side elevational view showing an intermediate position of the rear bow of the top illustrated in Figure 6 between the closed position and an open position.

### DETAILED DESCRIPTION OF THE INVENTION

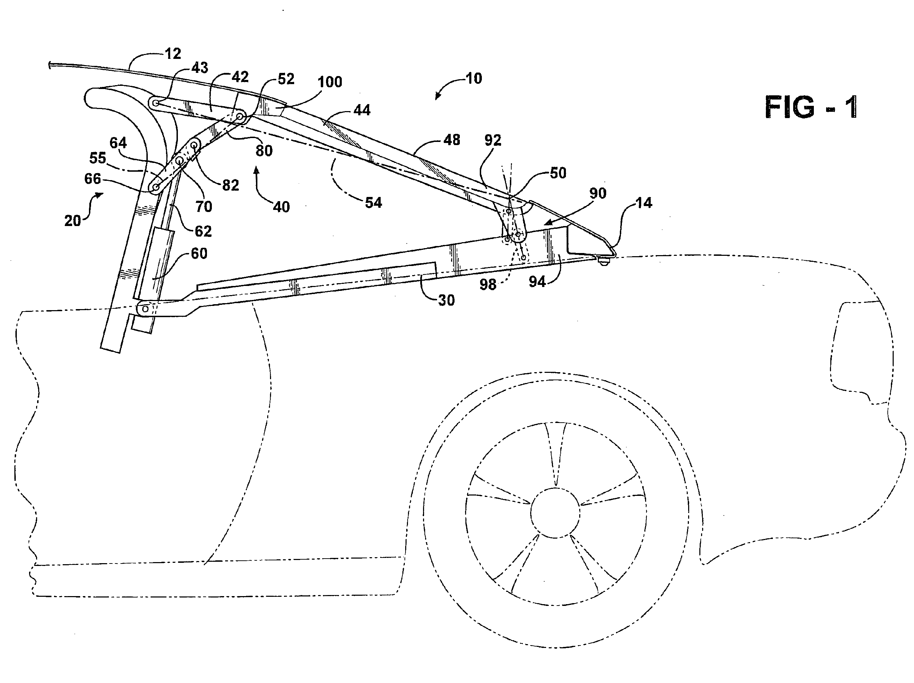

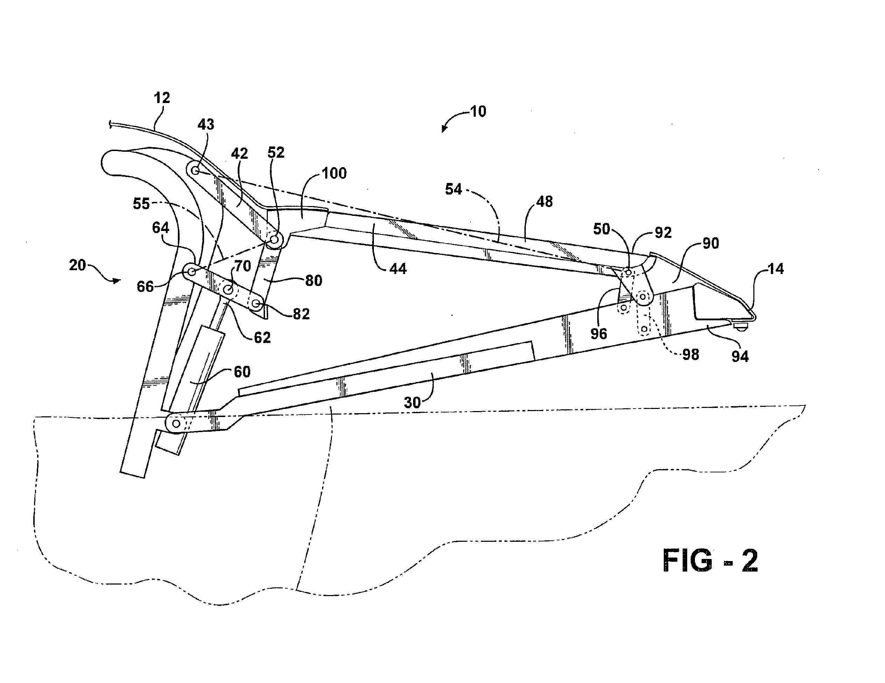

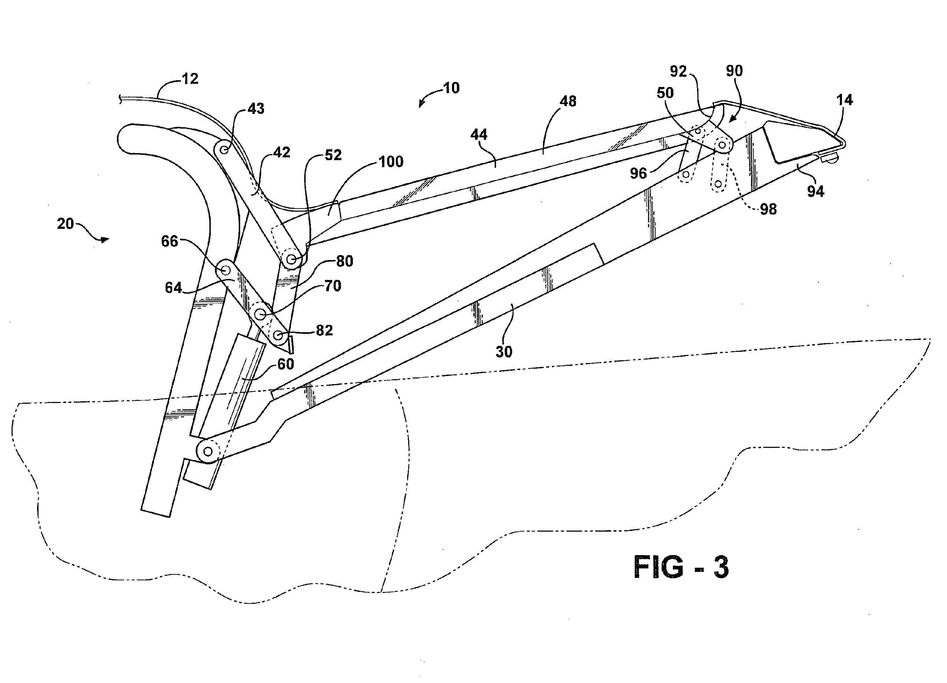

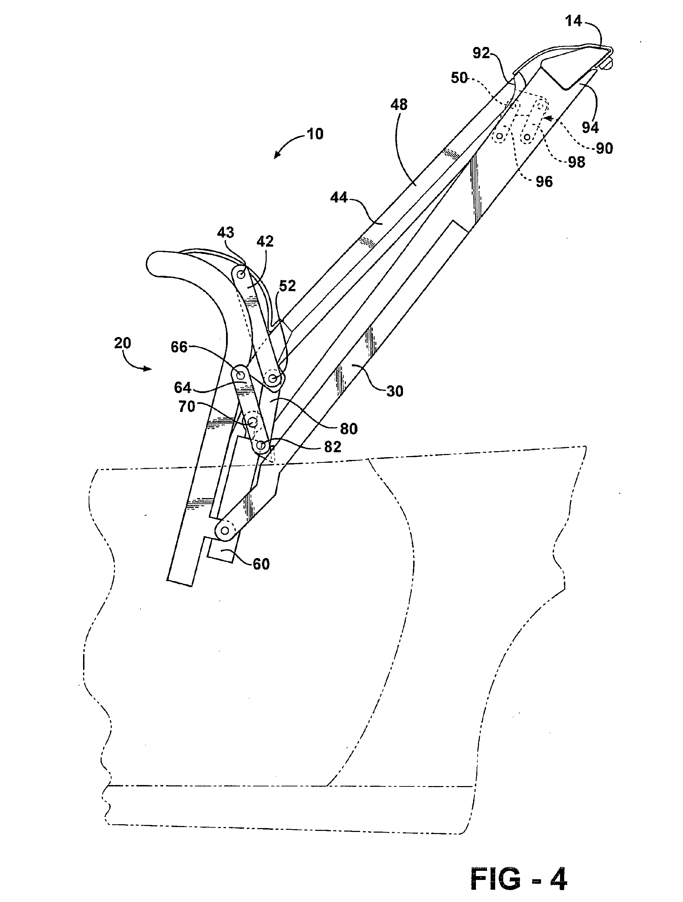

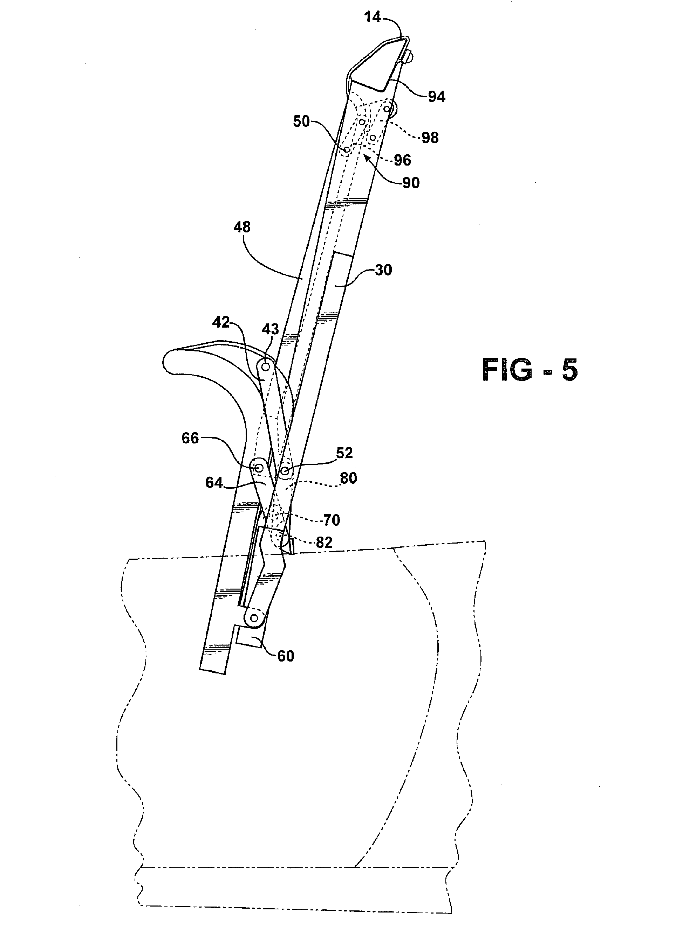

Referring to the figures, a convertible top for a motor vehicle is generally indicated at 10. The top 10 includes a flexible cover 12. The top 10 also includes a linkage 20 that supports the front portion of the cover 12. The linkage 20 provides movement of the top 10 between an extended position extending over a passenger compartment in the vehicle and a retracted position folded in a storage space adjacent the passenger compartment. As will be clear to those of skill in the art, the linkage 20 may include additional members that extend forwardly of the illustrated member to support the cover and to interconnect with the windshield header of the vehicle. The top 10 also includes a rear bow 30 for supporting a rear edge 14 of the cover 12. In the illustrated embodiment, the forward end of the rear bow 30 is pivotally coupled to the linkage 20 near where the linkage connects to the body. As such, the rear bow 30 may be said to be pivotally coupled to the vehicle body. The rear bow articulates the rear edge 14 of the cover 12 during movement of the top 10 between the extended and retracted positions. The rear bow 30 is movable between a closed position, as shown in Figure 1, and a generally upwardly raised open position just prior to movement of the top to the retracted position, as shown in Figure 5. In the closed position, the rear bow 30 may be said to be disposed adjacent a body panel (shown in phantom lines) of the vehicle. Intermediate positions of the rear bow 30 between the closed position and the generally upwardly raised open position are shown in Figures 2-4. Described in greater detail below, the top 10 also includes an overcenter arrangement or overcenter linkage 40 operatively coupled between the linkage 20 and the rear bow 30 for facilitating retention of the rear bow 30 in the closed position.

The overcenter arrangement 40 includes a link 42 pivotally coupled to the linkage 20 by a first pivot 43. A backlight assembly 44 having a rear window 48 is pivotally coupled to the rear bow 30 by a pivot assembly 50. The pivot assembly 50 may be a momentary pivot defined by a four-bar linkage 90 that pivotally interconnects a bottom end 92 of the backlight assembly 44 and the rear bow 30. The rear four-bar linkage 90 allows articulation of the backlight assembly 44 relative to the rear bow 30 during movement of the top 10 between the closed and open positions without overtensioning the cover 12. The four-bar linkage 90 includes a first member 96 and a second member 98. Each member 96, 98 includes one end pivotally coupled to the bottom end 92 of the backlight assembly 44 and an opposite end pivotally coupled to a distal end 94 of the rear bow 30. Alternatively, the second pivot may be defined by a simple pivotal connection between the backlight assembly 44 and the rear bow 30 or a different linkage arrangement. In any event, Figures 1-4 illustrate that the backlight assembly 44 is at least part of a rear bow linkage.

The backlight assembly 44 and the link 42 are pivotally coupled to each other by a third pivot 52. The first pivot 43 and pivot assembly 50 define a first overcenter line 54. The third pivot 52 is movable in and out of an overcenter position. In the overcenter position, the third pivot 52 is disposed above the first overcenter line 54 when the top is in the extended position to maintain the rear bow 30 in the closed position. The third pivot 52 is out of the overcenter position below the first overcenter line 54 to allow relative pivotal movement between the link 42 and the backlight assembly 44 and, in turn, articulation of the rear bow 30 during movement of the top 10 between the extended and retracted positions.

An actuator 60 is provided for moving the third pivot 52 in and out of the overcenter position. The actuator 60 may be a linear actuator with one end coupled to the vehicle body or linkage 20 and an opposite actuated end 62 coupled to a member of the overcenter arrangement 40. In the illustrated embodiment, an actuator linkage interconnects the actuator 60 with the overcenter arrangement 40. The actuator linkage includes a drive link 64 and a connector link 80. The drive link 64 is pivotally coupled at one end thereof to a member of the linkage 20 by a fourth pivot 66. The drive link 64 is pivotally coupled to the actuated end 62 of the actuator 60 by a fifth pivot 70. The connector link 80 is pivotally coupled at one end thereof to the third pivot 52. Alternatively, the connector link 80 may be pivotally coupled to the overcenter arrangement 40 in a different location. The connector link 80 is also pivotally coupled to drive link 64 by a sixth pivot 82. In the illustrated embodiment, the fifth pivot 70 connecting the actuator 60 to the drive link 64 is disposed between the fourth 66 and sixth 82 pivots.

Alternatively, the illustrated linear actuator may be replaced by an electric motor rotatably driving the drive link 64 and/or connector link 80 about the sixth pivot 82.

Alternatively, a trigger mechanism may be utilized between the linkage 20 and the overcenter arrangement 40 for moving the third pivot 52 in and out of the overcenter position in response to a corresponding articulation of the linkage 20. For example, as will be clear to those of skill in the art, the linkage 20 may include additional members that extend forwardly, with one of these members being interconnected with the overcenter arrangement 40 so as to move the third pivot 52 in and out of the overcenter position.

In another embodiment, a second overcenter arrangement helps to maintain the rear bow 30 in the closed position. More specifically, a second overcenter line 55 is defined by the third pivot 52 and the fourth pivot 66. The sixth pivot 82 is movable above the second overcenter line to an overcenter position to hold the rear bow 30 in the closed position. Movement of the sixth pivot 82 below the second overcenter line 55 allows pivotal movement of drive link 64 and the connector link 80 about the sixth pivot 82 and, in turn, movement of the rear bow 30 out of the closed position.

In a further alternative, the overcenter arrangement 40 may be articulated in other ways. As one example, an actuator may be directly connected to the overcenter arrangement 40 in order to move the rear bow between the closed and open positions. As a further example, an actuator may be interconnected with the overcenter arrangement using a different sent of links than illustrated, or links that connect in different positions than shown.

A cross member 100 may be supported along a forward end of the backlight assembly 44 and extend transversely across the vehicle to function as a bow for supporting and tensioning a portion of the cover 12 during movement of the top 10 between the closed and open positions. As known to those of skill in the art, such a bow may be referred to as a number four bow (even if not the fourth bow from the front), a corner bow or a styling bow. This bow defines the point at which the slope of the roof changes. Typically, such a bow is separately provided and may be articulated to tension the top. It is appreciated that the backlight assembly 44 can also serve or integrate as the corner bow and thus the cross member 100 need not be present.

In the illustrated embodiment, mounting the corner bow 100 to the overcenter arrangement 40 allows this bow to be articulated along with the rear bow (also referred to as a number five bow) and dispenses with an additional mechanism. In the illustrated embodiment, the corner bow is supported at the third pivot 52 just forward of the rear window 48. It could be supported, directly or indirectly, elsewhere on the overcenter arrangement 40, such as being mounted to the link 42.

In another embodiment of the invention, link 42 and backlight assembly 44 may form links of an articulating mechanism for providing movement of the rear bow 30 during movement of the top between the closed and open positions. In this case, the link 42 and backlight 46 are coupled by the third pivot 52, but does not necessarily function as an overcenter arrangement as in the previous embodiment.

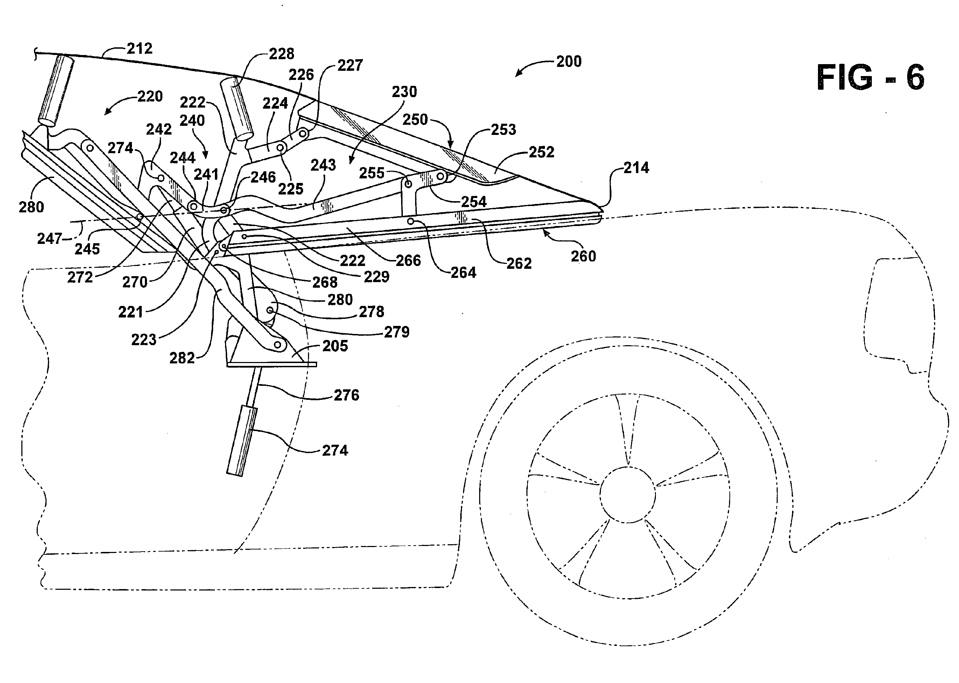

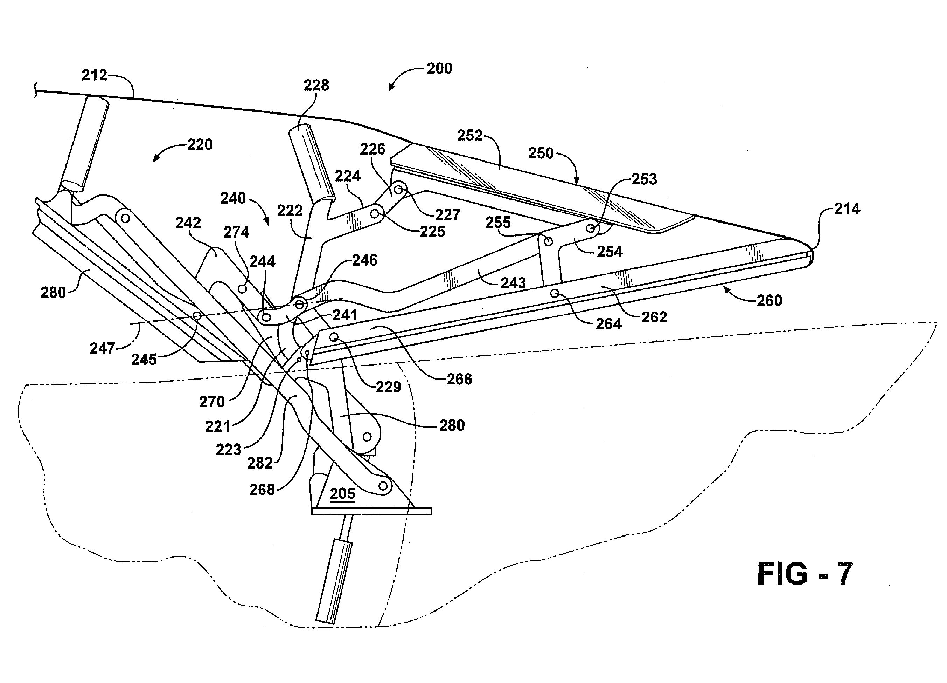

Referring to Figures 6 and 7, another embodiment of a convertible top for a motor vehicle is shown generally at reference numeral 200. The top 200 includes a flexible cover 212 and a linkage 220 that supports a front portion of the cover 212. The linkage 220 can provide movement of the top 200 between an extended position extending over a passenger compartment in the vehicle and a retracted position folded in a storage space adjacent the passenger compartment. In addition, the linkage 220 can include additional members that extend forwardly of a backlight assembly 250 and/or a rear bow 260 to interconnect with the windshield header (not shown) of the vehicle.

The top 200 can also include the rear bow 260 for supporting a rear edge 214 of the cover 212. The rear bow 260 articulates the rear edge 214 of the cover 212 during movement of the top 200 between the extended and retracted positions. In the closed position, the rear bow 260 can be said to be disposed adjacent a body panel (shown in phantom lines) of the vehicle. Described in greater detail below, the top 200 also includes an overcenter arrangement/linkage 240 operatively coupled between the linkage 220 and the rear bow 260 for facilitating retention of the rear bow 260 in the closed position.

The rear bow 260 and/or a backlight assembly 250 can be operatively coupled to each other and/or to the linkage 220 through a rear bow linkage 230. The rear bow linkage can include a rear bow connecting link 243, a backlight-rear bow link 254 and an optional backlight-corner bow link 226. It is appreciated that additional links can be included that provide coupling between the backlight assembly 250, rear bow 260 and/or linkage 220 forwardly located therefrom. In the alternative, it is further appreciated that all of the links illustrated for the rear bow linkage 230 in Figures 6 and 7 are not required for the embodiment to be enabled.

The overcenter linkage 240 can include a first connecting link 241 pivotally coupled to the rear bow connecting link 243 by a rear bow pivot 246. In addition, the overcenter linkage 240 can have a drive link 242 pivotally coupled to the first connecting link 241 about an overcenter pivot 244, the drive link 242 also pivotally coupled to the linkage 220 about a linkage pivot 245. In some instances, the first connecting link 241 has a rearward end pivotally coupled to the rear bow connecting link 243 about the rear bow pivot 246; the drive link 242 has a forward end pivotally connected the linkage 220 about the linkage pivot 245; and a forward end of the first connecting link 241 is pivotally coupled to a rearward end of the drive link 242 about the overcenter pivot 244. It is appreciated that the terms "forward" and "rearward" are used relative to the front end and rear end, respectively, of the vehicle.

It is appreciated that the linkage 220 can include a rear side rail 280, to which the drive link 242 can be pivotally coupled to, however this is not required. The linkage pivot 245 and the rear bow pivot 246 can define an overcenter line 247. The overcenter pivot 244 is movable in and out of an overcenter position. In the overcenter position, the overcenter pivot 244 is disposed above the overcenter line 247 when the top is in the extended position to maintain the rear bow 260 in the closed position. The overcenter pivot 244 is disposed below the overcenter line 247 to allow relative pivotal movement between the first connecting link 241 and the drive link 242 and, in turn, articulation of the rear bow 260 during movement of the top 200 between the extended and retracted positions.

The rear bow connecting link 243 is pivotally coupled to the backlight assembly 250 and the rear bow 260 through the backlight-rear bow link 254. The rear bow connecting link 243 can be pivotally coupled to the backlight-rear bow link 254 at a pivot 255, and the backlight-rear bow link 254 can be pivotally coupled to the backlight assembly 250 at a pivot 253. In some instances, the backlight-rear bow link 254 can be an L-shaped link or bracket. As shown in Figures 6 and 7, the backlight assembly 250 can be pivotally coupled to the rear bow 260 through the backlight-rear bow link 254 and a pivot 264. As such, the linkage 220 and the overcenter arrangement 240 are movably coupled to the backlight assembly 250 and the rear bow 260. It is appreciated that the backlight-rear bow link 254 is pivotally coupled to the rear bow 260 at a middle portion 262, however this is not required.

The linkage 220 can have a main member 222, which in some instances is pivotally coupled to the backlight assembly 250 through an arm 224, the optional backlight-corner bow link 226 and pivots 225 and 227. It is appreciated that in some instances, the arm 224 can also be pivotally coupled directly to the backlight assembly 250 at pivot 227. The main member 222 can also be attached to a corner bow 228, the corner bow 228 operable to support at least a portion of the cover 212. Furthermore, the main member 222 can be pivotally coupled to the first connecting link 241 and the rear bow connecting link 243 at rear bow pivot 246. It is appreciated that the main member 220 can extend beyond the rear bow pivot 246 and be pivotally coupled to the rear bow 260 at a main member-rear bow pivot 229.

A scissor linkage 278 can be included, the scissor linkage 278 affording for the pulling of the top 200 into the storage space after the backlight assembly 250 and rear bow 260 have been raised and a deck lid, a tonnea cover or an assembly of the two has also been raised and allowed access to the storage space. It is appreciated that the scissor linkage 278 also affords for pushing the top 200 out of the storage space. The scissor linkage 278 can be pivotally coupled to a second actuator 274. The second actuator 274 can be pivotally couple to the vehicle at a vehicle-second actuator pivot (not shown) and have a piston end 276 that is pivotally coupled to the scissor linkage 278 at an actuator-second drive link pivot 279. In addition, a forward end 266 of the rear bow 260 can be pivotally coupled to the rear side rail 280 at a rear bow-side rail pivot 268.

Pivotally coupling the main member 222, the first connecting link 241 and the rear bow connecting link 243 to the rear side rail 280 can be an extension link 221. The extension link 221, and the main member 22, first connecting link 241 and rear bow connecting link 243 can be coupled at the rear bow pivot 246, while the extension link 221 can be couple to the rear side rail at an extension link-rear side rail pivot 223. It is appreciated that the pivots 223, 229 and 268 can be located along different pivot axes as shown in the figures, or in the alternative, be located along one pivot axis or two pivot axes. Likewise, it is further appreciated that the pivotally coupling of the main member 222, the first connecting link 241, and/or the rear bow connecting link 243 can be located along one axis as shown in the figures, or more than one pivot axes.

An actuator 270 can be provided for moving the drive link 242 and thus the overcenter pivot 244 in and out of the overcenter position. The actuator 270 can be a linear actuator with one end coupled to the vehicle body, a base 205, or the like, and an opposite actuated end 272 coupled to the drive link 242 about a pivot 274.

A balance link 282 can be included and pivotally coupled to the linkage 220, for example to the rear side rail 280, and the base 205.In this manner, the top 200 can be moved between the extended and retracted positions in a stable and balanced manner.

In operation, the linkage 220, rear bow linkage 230, overcenter arrangement 240 and actuator 270 provide for an overcenter position of the overcenter pivot 244 which affords for the rear bow 260 to be maintained at a location adjacent to a body panel of the motor vehicle. When the top 200 is desired to be retracted and stored in a storage compartment behind passenger seating, the actuator 270 can exert a force on the drive link 242 and afford for the overcenter pivot 244 to move below the overcenter line 247 and pivotally move the backlight assembly 250 and the rear bow 260 in a generally upward direction.In this manner, a deck lid, a tonneau cover or an assembly of both can be raised and provide access to a storage space in which the top 200 can be folded into and stored. In addition, the linkage 220, rear bow linkage 230, overcenter arrangement 240 and actuator 270 can provide positive control of a backlight 252 and/or backlight assembly 250. Stated differently, the linkage 220, rear bow linkage 230, overcenter arrangement 240 and actuator 270 can provide for independent control of the backlight 252 and/or backlight assembly 250 instead of the backlight 252 and/or backlight assembly 250 being simply held in place by the cover 212.

## Claims

1. A convertible top (10, 200) for a motor vehicle comprising:
a cover (12, 212);
a backlight assembly (44, 250) having a rear window (48, 252) and supporting a rear portion of the cover (12, 212);
a linkage (20, 220) supporting a portion of the cover (12, 212) forward of the backlight (46, 252) and providing movement of the top (10, 200) between an extended position extending over a passenger compartment and a retracted position disposed in a storage space adjacent the passenger compartment;
a rear bow (30, 260) supporting a rear edge (14, 214) of the cover (12, 212), the rear bow (30, 260) articulating the rear edge (14, 214) of the cover (12, 212) during movement of the top (10, 200) between the extended and retracted positions, the rear bow (30, 260) being movable between a closed position disposed on a top side of a body panel of the motor vehicle adjacent to the body panel and a generally upwardly raised open position;
a rear bow linkage (90, 230) pivotally coupled to the rear bow (30, 260);
**characterized in that** the convertible top (10, 200) further comprises an overcenter linkage (40, 240) having a drive link (42, 242) and a first connecting link (48, 241), the drive link (42, 242) having one end pivotally coupled to the linkage (20, 220) about a linkage pivot (43, 245) and the first connecting link (48, 241) having one end pivotally coupled to the rear bow linkage (90, 230) about a rear bow linkage pivot (50, 246), the drive link (42, 242) also pivotally coupled to the first connecting link (48, 241) about an overcenter pivot (52, 244).

2. The convertible top (10, 200) as set forth in claim 1, wherein the linkage pivot (43, 245) and the rear bow linkage pivot (50, 246) define an overcenter line (54, 247), the overcenter pivot (52, 244) being in an overcenter position above the overcenter line (54, 247) when the top (10, 200) is in the extended position to maintain the rear bow (30, 260) in the closed position, the overcenter pivot (52, 244) being out of the overcenter position below the overcenter line (54, 247) to allow articulation of the rear bow (30, 260) during movement of the top (10, 200) between the extended and retracted positions.

3. The convertible top (10, 200) as set forth in claim 2, further comprising an actuator (60, 270) operatively coupled to the overcenter linkage (40, 240) for actuating the overcenter pivot (52, 244) in and out of the overcenter position.

4. The convertible top (10, 200) as set forth in claim 1, wherein the backlight assembly (44, 250) is independently controlled from a cover (12, 212) by the linkage (20, 220), rear bow linkage (90, 230) and overcenter linkage (40, 240).

5. The convertible top (10) as set forth in claim 1, wherein the backlight assembly (44) replaces one of the links of the overcenter linkage (40).

6. The convertible top (10) as set forth in claim 5, wherein the backlight assembly (44) is the drive link.

7. The convertible top (10) as set forth in claim 5, wherein the backlight assembly (44) is the first connecting link.

8. The convertible top (10, 200) as set forth in claim 1, wherein the backlight assembly (44, 250) integrates as a corner bow.

9. The convertible top (10, 200) as set forth in claim 1, wherein the backlight assembly (44, 250) is pivotally coupled to the linkage (20, 220), rear bow linkage (90, 230) and overcenter linkage (40, 240).

10. The convertible top (10, 200) as set forth in claim 1, further including an actuator linkage operatively coupling the actuator (60, 270) to the overcenter arrangement (40, 240).

11. The convertible top (10, 200) as set forth in claim 1, wherein the rear bow linkage (90, 230) pivotally couples the rear bow (30, 260) to the linkage (20, 220).

12. The convertible top (10, 200) as set forth in claim 1, further comprising a corner bow (100, 228) for supporting the cover (12, 212), the corner bow (100, 228) being interconnected with the overcenter arrangement (40, 240) forward of the rear window (48, 252).

## Patentansprüche

1. Faltverdeck (10, 200) für ein Kraftfahrzeug, umfassend:
einen Bezug (12, 212);
eine Heckscheibenanordnung (44, 250), die ein Heckfenster (48, 252) aufweist und einen heckseitigen Abschnitt des Bezugs (12, 212) trägt;
ein Gestänge (20, 220), das einen vor der Heckscheibe (46, 252) gelegenen Abschnitt des Bezugs (12, 212) trägt und eine Bewegung des Verdecks (10, 200) zwischen einer ausgefahrenen Stellung, die einen Fahrgastraum überspannt, und einer eingefahrenen Stellung,
die in einem Ablageraum benachbart dem Fahrgastraum angeordnet ist, bereitstellt;
einen Heckbügel (30, 260), der einen heckseitigen Rand (14, 214) des Bezugs (12, 212) trägt,
wobei der Heckbügel (30, 260) den heckseitigen Rand (14, 214) des Bezugs (12, 212) während der Bewegung des Verdecks (10, 200) zwischen der ausgefahrenen und der eingefahrenen Stellung gelenkig lagert, und wobei der Heckbügel (30, 260) zwischen einer geschlossenen Stellung, die auf einer Oberseite eines Karosserieteils des Kraftfahrzeugs dem Karosserieteil benachbart angeordnet ist, und einer allgemein nach oben angehobenen, offenen Stellung beweglich ist; und
ein Heckbügelgestänge (90, 230), das verschwenkbar mit dem Heckbügel (30, 260) gekoppelt ist;
**dadurch gekennzeichnet, dass** das Faltverdeck (10, 200) ferner ein Übertotpunktgestänge (40, 240) mit einem Antriebslenker (42, 242) und einem ersten Verbindungslenker (48, 241) umfasst, wobei der Antriebslenker (42, 242) mit einem Ende um ein Gestängegelenk (43, 245) verschwenkbar mit dem Gestänge (20, 220) gekoppelt ist und der erste Verbindungslenker (48, 241) mit einem Ende um ein Heckbügelgestängegelenk (50, 246) verschwenkbar mit dem Heckbügelgestänge (90, 230) gekoppelt ist, wobei der Antriebslenker (42, 242) zudem um ein Übertotpunktgelenk (52, 244) verschwenkbar mit dem ersten Verbindungslenker (48, 241) gekoppelt ist.

2. Faltverdeck (10, 200) nach Anspruch 1, wobei das Gestängegelenk (43, 245) und das Heckbügelgestängegelenk (50, 246) eine Übertotpunktlinie (54, 247) festlegen, wobei das Übertotpunktgelenk (52, 244) sich in einer Übertotpunktstellung über der Übertotpunktlinie (54, 247) befindet, wenn das Verdeck (10, 200) die ausgefahrene Stellung einnimmt, um den Heckbügel (30, 260) in der geschlossenen Stellung zu halten, und das Übertotpunktgelenk (54, 244) sich außerhalb der Übertotpunktstellung unterhalb der Übertotpunktlinie (54, 247) befindet, um die angelenkte Bewegung des Heckbügels (30, 260) während der Bewegung des Verdecks (10, 200) zwischen der ausgefahrenen und der eingefahrenen Stellung zuzulassen.

3. Faltverdeck (10, 200) nach Anspruch 2, ferner umfassend ein Stellglied (60, 270), das betätigbar mit dem Übertotpunktgestänge (40, 240) gekoppelt ist, um das Übertotpunktgelenk (52, 244) in und außerhalb der Übertotpunktstellung zu betätigen.

4. Faltverdeck (10, 200) nach Anspruch 1, wobei die Heckscheibenanordnung (44, 250) unabhängig von einem Bezug (12, 212) durch das Gestänge (20, 220), das Heckbügelgestänge (90, 230) und das Übertotpunktgestänge (40, 240) gesteuert wird.

5. Faltverdeck (10) nach Anspruch 1, wobei die Heckscheibenanordnung (44) einen der Lenker des Übertotpunktgestänges (40) ersetzt.

6. Faltverdeck (10) nach Anspruch 5, wobei die Heckscheibenanordnung (44) der Antriebslenker ist.

7. Faltverdeck (10) nach Anspruch 5, wobei die Heckscheibenanordnung (44) der erste Verbindungslenker ist.

8. Faltverdeck (10, 200) nach Anspruch 1, wobei die Heckscheibenanordnung (44, 250) als Eckspriegel integriert ist.

9. Faltverdeck (10, 200) nach Anspruch 1, wobei die Heckscheibenanordnung (44, 250) verschwenkbar mit dem Gestänge (20, 220), dem Heckbügelgestänge (90, 230) und dem Übertotpunktgestänge (40, 240) gekoppelt ist.

10. Faltverdeck (10, 200) nach Anspruch 1, ferner umfassend ein Betätigungsgestänge, welches das Stellglied (60, 270) betätigbar mit der Übertotpunktanordnung (40, 240) koppelt.

11. Faltverdeck (10, 200) nach Anspruch 1, wobei das Heckbügelgestänge (90, 230) den Heckspriegel (30, 260) verschwenkbar mit dem Gestänge (20, 220) koppelt.

12. Faltverdeck (10, 200) nach Anspruch 1, ferner umfassend einen Eckspriegel (100, 228) zum Abstützen des Bezugs (12, 212), wobei der Eckspriegel (100, 228) mit der Übertotpunktanordnung (40, 240) vor dem Heckfenster (48, 252) verbunden ist.

## Revendications

1. Capote pliante (10, 200) pour un véhicule automobile, ladite capote comportant:
une enveloppe (12, 212);
un ensemble de lunette arrière (44, 250), présentant une fenêtre arrière (48, 252) et supportant une partie arrière de ladite enveloppe (12, 212);
une tringlerie (20, 220) supportant une partie de l'enveloppe (12, 212) située en avant par rapport à la lunette arrière (46, 252) et permettant le déplacement de la capote (10, 200) entre une position de sortie recouvrant un habitacle et une position escamotée disposée dans un compartiment de rangement adjacent audit habitacle;
un arceau arrière (30, 260) supportant un bord arrière (14, 214) de l'enveloppe (12, 212), ledit arceau arrière (30, 260) articulant le bord arrière (14, 214) de l'enveloppe (12, 212) pendant le déplacement de la capote (10, 200) entre la position de sortie et la position escamotée, ledit arceau arrière (30, 260) étant déplaçable entre une position fermée, disposée sur une face d'un élément de carrosserie dudit véhicule automobile, adjacente audit élément de carrosserie, et
une position ouverte, généralement élevée vers le haut;
une tringlerie d'arceau arrière (90, 230) couplée à pivotement avec l'arceau arrière (30, 260);
**caractérisé en ce que** la capote pliante (10, 200) comporte en outre une tringlerie à passage de point mort (40, 240) présentant une bielle d'entraînement (42, 242) et une première bielle de liaison (48, 241), une extrémité de ladite bielle d'entraînement (42, 242) étant couplée, à pivotement autour d'un pivot de tringlerie (43, 245), avec la tringlerie (20, 220), et une extrémité de la première bielle de liaison (48, 241) étant couplée, à pivotement autour d'un pivot de tringlerie d'arceau arrière (50, 246), avec la tringlerie d'arceau arrière (90, 230), ladite bielle d'entraînement (42, 242) étant en même temps couplée, à pivotement autour d'un pivot à passage de point mort (52, 244), avec la première bielle de liaison (48, 241).

2. Capote pliante (10, 200) selon la revendication 1, dans laquelle le pivot de tringlerie (43, 245) et le pivot de tringlerie d'arceau arrière (50, 246) définissent une ligne de passage de point mort (54, 247), le pivot à passage de point mort (52, 244) se trouvant dans une position de passage de point mort au-dessus de la ligne de passage de point mort (54, 247) lorsque la capote (10, 200) est dans la position de sortie afin de maintenir l'arceau arrière (30, 260) dans la position fermée, ledit pivot à passage de point mort (52, 244) étant sorti de la position de passage de point mort au-dessous de la ligne de passage de point mort (54, 247) afin de permettre l'articulation de l'arceau arrière (30, 260) pendant le déplacement de la capote (10, 200) entre la position de sortie et la position escamotée.

3. Capote pliante (10, 200) selon la revendication 2, comprenant en outre un actionneur (60, 270) couplé de manière opérationnelle avec la tringlerie à passage de point mort (40, 240) afin d'actionner le pivot à passage de point mort (52, 244) vers la position de passage de point mort et en dehors de cette position.

4. Capote pliante (10, 200) selon la revendication 1, dans laquelle l'ensemble de lunette arrière (44, 250) est commandé indépendamment d'une enveloppe (12, 212) par la tringlerie (20, 220), la tringlerie d'arceau arrière (90, 230) et la tringlerie à passage de point mort (40, 240).

5. Capote pliante (10) selon la revendication 1, dans laquelle l'ensemble de lunette arrière (44) remplace l'une des bielles de la tringlerie à passage de point mort (40).

6. Capote pliante (10) selon la revendication 5, dans laquelle l'ensemble de lunette arrière (44) est la bielle d'entraînement.

7. Capote pliante (10) selon la revendication 5, dans laquelle l'ensemble de lunette arrière (44) est la première bielle de liaison.

8. Capote pliante (10, 200) selon la revendication 1, dans laquelle l'ensemble de lunette arrière (44, 250) est intégré en tant qu'arceau de coin.

9. Capote pliante (10, 200) selon la revendication 1, dans laquelle l'ensemble de lunette arrière (44, 250) est couplé à pivotement avec la tringlerie (20, 220), la tringlerie d'arceau arrière (90, 230) et la tringlerie à passage de point mort (40, 240).

10. Capote pliante (10, 200) selon la revendication 1, comprenant en outre une tringlerie d'actionnement couplant de manière opérationnelle l'actionneur (60, 270) avec l'ensemble à passage de point mort (40, 240).

11. Capote pliante (10, 200) selon la revendication 1, dans laquelle la tringlerie d'arceau arrière (90, 230) couple à pivotement l'arceau arrière (30, 260) avec la tringlerie (20, 220).

12. Capote pliante (10, 200) selon la revendication 1, comprenant en outre un arceau de coin (100, 228) destiné à supporter l'enveloppe (12, 212), ledit arceau de coin (100, 228) étant relié avec l'ensemble à passage de point mort (40, 240) en avant de la fenêtre arrière (48, 252).
